(19) Europäisches Patentamt / European Patent Office / Office européen des brevets

(11) **EP 4 287 289 A1**

(12) **EUROPEAN PATENT APPLICATION**

(43) Date of publication:
06.12.2023 Bulletin 2023/49

(21) Application number: 23176367.3

(22) Date of filing: 31.05.2023

(51) International Patent Classification (IPC):
*H01M 4/04* (2006.01)   *H01M 4/131* (2010.01)
*H01M 4/136* (2010.01)   *H01M 4/1391* (2010.01)
*H01M 4/1397* (2010.01)   *H01M 4/62* (2006.01)
*H01M 4/02* (2006.01)

(52) Cooperative Patent Classification (CPC):
H01M 4/0404; H01M 4/131; H01M 4/136;
H01M 4/1391; H01M 4/1397; H01M 4/625;
H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.06.2022 US 202263365808 P**

(71) Applicant: **II-VI Delaware, Inc.
Wilmington, DE 19890 (US)**

(72) Inventors:
• **Lu, Xinyu
Wilmington, 19890 (US)**
• **Xu, Wen-Qing
Wilmington, 19890 (US)**

(74) Representative: **Tegethoff, Sebastian
Fortmann Tegethoff Patent- und Rechtsanwälte
Oranienburger Straße 39
10117 Berlin (DE)**

(54) **ELECTRODES WITH CRACKS**

(57) This disclosure is directed an electrode and methods of making an electrode. The electrode includes a substrate and a body laminated to the substrate. The body includes an active material and an inactive material. A plurality of pores are defined by the body. A plurality of cracks are defined in a first surface of the body and a plurality of islands are defined in the first surface of the body. The plurality of cracks are wholly or partially surrounded by respective cracks of the plurality of cracks.

**FIG. 1**

**Description**

TECHNICAL FIELD

This disclosure is generally directed to the field of electrochemical energy, and more particularly to electrodes with a plurality of cracks that enable high active material loading.

BACKGROUND

Batteries and other electrochemical devices provide a useful means of storing energy for later use. But there exists a need for batteries with improved energy density, increased charge/discharge rate capabilities, and increased cycling stability.

SUMMARY

The inventors recognized that electrodes with a plurality of cracks can enable high active material loading while resisting the delamination from the substrate. This can improve energy density, increase charge/discharge rate capabilities, and increase cycling stability. Accordingly, one aspect of this disclosure is directed to an electrode that includes a substrate and a body laminated to the substrate. The body includes an active material and an inactive material. The electrode also includes a plurality of pores defined by the body and a plurality of cracks defined in a first surface of the body. The electrode also includes a plurality of islands defined in the first surface of the body. The plurality of cracks are wholly or partially surrounded by respective cracks of the plurality of cracks. Implementations may include one or more of the following features. The active material has a loading greater than 2 mg/cm$^2$ and the plurality of cracks are configured to resist delamination of the body and the substrate at the loading. The loading is greater than 6 mg/cm$^2$. The plurality of islands have an average size of between 0.1 mm and 10 mm. The plurality of islands have an average size of between 0.2 mm and 1.2 mm. The plurality of islands have an average circularity of between 0.10 and 0.75. The plurality of islands have an average roundness of between 0.35 and 0.75. The active material may include at least one of oxygen, sulfur, selenium, or tellurium. The plurality of cracks define pathways into the electrode that are configured to receive an electrolyte. The pathways are configured to improve ion transfer from the electrolyte to an inner subset of the active material that is located closer to one or more of the pathways than to the first surface. A size of each of the plurality of cracks is greater than an average size of the pores. The size of each of the plurality of cracks is greater than a size of a largest pore of the pores. The electrode is a cathode.

Another general aspect of the disclosure is directed to a method of manufacturing an electrode. The method of manufacturing includes forming a slurry, which can include an active material supported on an inactive material and a solvent. The method of manufacturing also includes mixing the slurry for a first period and mixing an additive material into the slurry for a second period. The method of manufacturing also includes coating the slurry onto a substrate and drying the slurry for a third period to form the electrode. The electrode may include a body laminated to the substrate. The body may include the active material and the inactive material and a plurality of cracks defined in a first surface of the body formed by evaporation of the additive material during the drying of the slurry.

Implementations may include one or more of the following features. The active material may include at least one of oxygen, sulfur, selenium, or tellurium and the inactive material may include carbon. The additive material may include at least one of dipropylene glycol dimethyl ether, diethylene glycol monobutyl ether, ethylene glycol monobutyl ether, dipropylene glycol methyl ether, or propylene glycol methyl ether. A boiling point of the additive material is higher than or equal to a boiling point of the solvent. The solvent is aqueous based and a surface tension of the additive material is less than or equal to a surface tension of the solvent. The solvent is non-aqueous based and a surface tension of the additive material is greater than or equal to a surface tension of the solvent. Drying is performed under ambient temperature. Drying is performed at a temperature ranging from 50°C to 70°C.

Another general aspect of the disclosure is directed to a method of manufacturing an electrode. The method of manufacturing includes forming a slurry, which can include an active material supported on an inactive material and a solvent. The method of manufacturing also includes flocculating the slurry for a first period and mixing an additive material into the slurry for a second period. The method of manufacturing also includes coating the slurry onto a substrate and drying the slurry for a third period to form the electrode. The electrode may include a body laminated to the substrate. The body may include the active material and the inactive material and a plurality of cracks defined in a first surface of the body formed by evaporation of the additive material during the drying of the slurry.

Implementations may include one or more of the following features. Flocculating the slurry can include adding a flocculant to the slurry. The flocculant can include at least one of dipropylene glycol dimethyl ether, diethylene glycol monobutyl ether, ethylene glycol monobutyl ether, dipropylene glycol methyl ether, or propylene glycol methyl ether. Flocculating the slurry can include increasing an electrolyte concentration of the slurry. Flocculating the slurry can include applying a mechanical force to the slurry.

Various additional features and advantages of this disclosure will become apparent to those of ordinary skill in the art upon review of the following detailed description of the illustrative embodiments taken in conjunction with the accompanying drawings.

BRIEF DESCRIPTION OF THE DRAWINGS

The following detailed description is better understood when read in conjunction with the appended drawings. For the purposes of illustration, examples are shown in the drawings; however, the subject matter is not limited to the specific elements and instrumentalities disclosed. In the drawings:

FIG. 1 shows a schematic cross-section view of a battery;
FIG. 2 shows a magnified view of a surface of an electrode with a plurality of cracks;
FIG. 3 shows a further magnification of the surface of the electrode shown in FIG. 2;
FIG. 4 shows a view of an electrode with a first thickness;
FIG. 5 shows a view of another electrode with a second thickness that is greater than the first thickness;
FIG. 6 shows a view of another electrode with a third thickness that is greater than the second thickness;
FIG. 7 shows a view of another electrode with a fourth thickness that is greater than the third thickness;
FIG. 8 shows a view of another electrode with a fifth thickness that is greater than the fourth thickness; and
FIG. 9 shows a process of manufacturing an electrode with a plurality of cracks.

DETAILED DESCRIPTION

The demand for a long life, high-energy-density and high-power-density rechargeable battery with the ability of being charged and discharged at a fast rate is ever increasing in electronics, electric/hybrid vehicles, aerospace/drones, submarines, and other industrial, military, and consumer applications. Lithium-ion batteries are examples of rechargeable batteries in the above-mentioned applications. However, the need for better performance and cycling capability have not been filled with current lithium-ion batteries as the technology in lithium-ion batteries has matured.

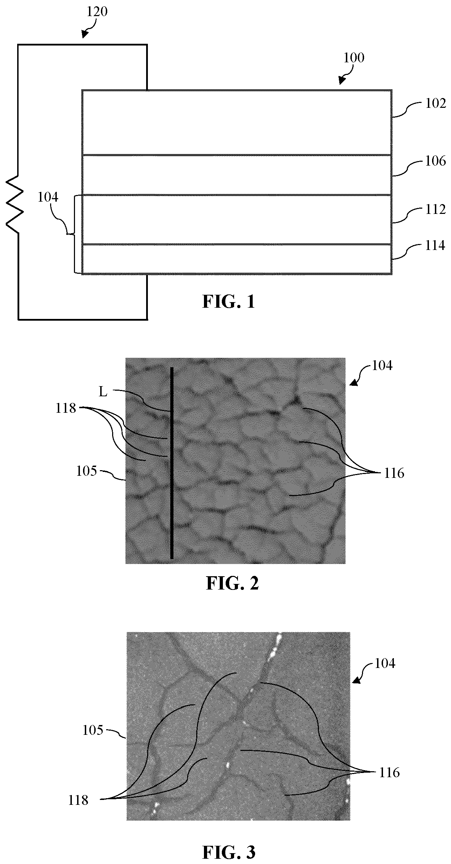

Aspects of this disclosure are directed to an electrode having a plurality of cracks. The cracks can resist delamination of the electrode from the substrate and thereby enable increased electrode thicknesses and/or higher active material loading of the electrode. The cracks can reduce the distance between active material of the electrode and electrolyte of an electrochemical device such as a battery. This can shorten the pathway for ion diffusion in the electrode. These features can improve the overall energy density and performance of the electrode. These and other aspects of the disclosure are described as follows with respect to FIGS. 1-9.

FIG. 1 shows a schematic, cross section view of a battery 100 according to aspects of this disclosure.

Though a battery 100 is described here, aspects of the electrode of the disclosure can be incorporated to other electrochemical devices such as for example fuel cells. FIG. 2 shows a magnified view of a first surface 105 of a second electrode 104 of the battery 100. FIG. 3 shows a further magnification of the second electrode 104 of FIG. 2.

The battery 100 can include a first electrode 102, the second electrode 104, and a separator 106 that electrically isolates the first electrode 102 and the second electrode 104. The separator 106 can include an electrolyte that can facilitate movement of ions (e.g., lithium ions) between the first electrode 102 and the second electrode 104. The electrolyte can wet or soak the first electrode 102 and the second electrode 104. The electrolyte can include, for example, one or more of $LiBF_4$, $LiC_2F_6NO_4S_2$, $LiNS_2O_4F_2$, lithium bis(oxalate borate (Li-BOB), $LiPO_2F_2$, $LiPF_6$, ether, carbonate, among other possibilities. The electrolyte can be an electrolyte used in, for example, traditional coin cell and pouch cell batteries. In embodiments such as solid electrodes, the separator 106 may only comprise the electrolyte. In other embodiments, the separator 106 can comprise a solid separator and electrolyte. The electrolyte can prevent or inhibit movement of electrons between the first electrode 102 and the second electrode 104. In some embodiments, the first electrode 102 can be an anode and the second electrode 104 can be a cathode. In some alternative embodiments, the first electrode 102 can be a cathode and the second electrode 104 can be an anode. Any description herein of embodiments of the geometry of a body 112 of the second electrode 104 can apply to a body of the first electrode 102 as well.

The second electrode 104 can include the body 112 laminated on a substrate 114. The body 112 can include an active material supported on an inactive material. The body 112 can define a plurality of pores. The pores can be distributed substantially uniformly throughout the body 112. The body 112 can define a plurality of cracks 116 extending partially or completely through the first surface 105 of the body 112. The body 112 can define a plurality of islands 118 of the first surface 105. The islands 118 can be wholly or partially surrounded by cracks 116. Accordingly, the term "island" as used herein is not limited to portions of the electrode body completely surrounded by cracks 116 and includes portions of the of the body substantially surrounded by cracks 116 to a degree that distinct islands 118 can be readily identified from other distinct islands 118. For example, an island 118 can be a region of the first surface 105 that is more than 50% surrounded by cracks 116.

The cracks 116 and islands 118 can allow higher active material loadings of body 112 without causing the body 112 to delaminate from the substrate 114. This can improve energy density and capacity of the second electrode 104. In embodiments the active material loading can be greater than or equal to 1 mg/cm$^2$, greater than or equal to 2 mg/cm$^2$, greater than or equal to 3 mg/cm², greater than or equal to 4 mg/cm², greater than or equal to 5 mg/cm², greater than or equal to 6 mg/cm², or greater than or equal to 7 mg/cm².

The islands 118 can be formed with a number of different geometries. For example, in embodiments the islands 118 can have an average size of between 0.5 mm and 10 mm. In some embodiments, the islands 118 can have an average size of between 0.5 mm and 1.2 mm. In some embodiments, the islands 118 can have a size of less than or equal to 10 mm, less than or equal to 5 mm, less than or equal to 4 mm, less than or equal to 3 mm, less than or equal to 2 mm, less than or equal to 1 mm, less than or equal to 0.8 mm, less than or equal to 0.5 mm, or less than or equal to 0.4 mm. Other sizes can be possible. The average size of the islands 118 can be calculated by using a known length of a virtual line L that extends along the first surface 105, as shown in FIG. 2. The average size of the islands 118 can be calculated by dividing the length of the virtual line L by the number of cracks 116 that bisect the line L along its length.

In embodiments, the islands 118 can have an average circularity of between 0.10 and 0.75. Other circularities outside this range are possible. The circularity of each island 118 can be calculated from the following equation:

$$Circularity = \frac{4\pi A}{P^2}$$

where A is the area of the island 118 and P is the perimeter of the island 118. The average circularity of the islands 118 can be calculated by averaging the circularity values of each island 118 in a representative region of the first surface 105.

In some embodiments, the islands 118 can have an average roundness of between 0.35 and 0.75. In some embodiments, the islands 118 can have an average roundness greater than or equal to 0.1, greater than or equal to 0.2, greater than or equal to 0.3. Other roundness values outside this range are possible. The roundness of each island 118 can be calculated from the following equation:

$$Roundness = \frac{4A}{\pi M^2}$$

where A is the area of the island 118 and M is the major axis of the island 118. The average roundness of the islands 118 can be calculated by averaging the roundness values of each island 118 in a representative region of the first surface 105.

The active material of the body 112 can react with the ions in an electrochemical reaction within the battery 100. For example, in some embodiments the second electrode 104 is a cathode and the active material can acquire electrons from the first electrode 102, i.e.,

the anode, via an external circuit 120, and the active material can be reduced in the electrochemical reaction. The active material can include, for example, one or more of oxygen, sulfur, selenium, tellurium, among other possibilities. For example, in embodiments in which the second electrode 104 is a cathode the active material can include, for example, one or more of an/a chalcogen element(s) (e.g., S, Se, O, and Te), fluoride, intercalated cathode material(s) (e.g., $LiCoO_2$, $LiMnO_2$, $LiNiO_2$, $LiCo_xNi_yMn_{1-x-y}O_2$ (wherein $x \leq 1$, $y \leq 1$ and $x + y \leq 1$), and $LiFePO_4$) that may include various dopants such as Ni, Mg, Al, Cr, Zn, Ti, Fe, Co, Ni, Cu, Nd, and La, supercapacitor material(s) (e.g., metal oxides/hydroxides), conductive polymer(s), among other possibilities. In embodiments in which the second electrode 104 is an anode the active material can include, for example, one or more of a/an element(s) from group IVA (e.g., C, Si, Sn), a/an element(s) from group IIIA (e.g., Al), a/an transition metal(s) from group IB-VIIIB (e.g., Zn, Cd, Ag, a/an alkaline earth metal(s) from group IIA e.g., Mg, Ca, a/an alkali metal(s) from group IA (e.g., Li, Na, K), a/an compound(s) (e.g., $Li_xSi_y$, $Li_xGe_y$, LiAl, $Li_xSn_y$, lithium-titanium-oxide (LTO), NiO, $SiO_x$), among other possibilities. In another example, the second electrode includes lithium. The active material can be supported on an inactive material such as for example carbon. The active material supported on the inactive material can form a composite material that in embodiments can include a binder. The binder can be aqueous or nonaqueous based. Other examples of the active material, inactive material, and binder are discussed later in reference to the process 900. In some embodiments, the second electrode 104 can be an anode and the active material can release electrons to the external circuit 120 and the active material can be oxidized in an electrochemical reaction.

The first surface 105 can abut against the separator 106. The cracks 116 can extend a depth from the first surface 105 into the second electrode 104. In embodiments, some or all of the cracks 116 can extend entirely through body 112 from the first surface 105 to the substrate 114. In embodiments, some or all of the cracks 116 can extend partially through the body 112 from the first surface 105 and terminating before the substrate 114.

The cracks 116 can define pathways into the second electrode 104 and the pathways can receive the electrolyte of the separator 106. Ions can move more freely within the electrolyte than within the active material. Accordingly, by providing pathways into the second electrode 104 for the electrolyte the cracks 116 can improve transfer of the ions to an inner subset of the active material within the second electrode 104 that is located closer to one or more of the pathways then to the first surface 105. That is, the cracks 116 can improve transfer of the ions to the inner subset of the active material by bringing electrolyte that can carry the ions closer to the inner subset of the active material as compared to the distance between the inner subset and the first surface 105. The cracks 116 can increase the surface area of the second electrode 104 in contact with the electrolyte and thereby improve transfer of the ions to the active material. By improving the transfer of the ions to the active material in the inner subset, the cracks 116 can increase the overall energy density of the battery 100, can increase the charge/discharge rate capabilities of the battery 100, and can increase cycling stability of the battery 100.

The body 112 can include an outer subset of the active material that is disposed closer to the first surface 105 than to any of the pathways defined by the cracks 116. A majority of the ions transferred to the outer subset can travel from electrolyte at the first surface 105. This is because the outer subset of the active material is disposed closer to the first surface 105 than to any of the pathways defined by the cracks 116. Conversely, a majority of the ions transferred to the inner subset can travel from electrolyte within the nearest of the pathways defined by the cracks 116 since the inner subset is disposed closer to at least one of the pathways defined by the cracks 116 than to the first surface 105. Put differently, the outer subset of the active material can be defined by the active material of the second electrode 104 that is located closer to the first surface 105 than to any of the second surfaces that define the cracks 116. The outer subset can transfer ions to and from the electrolyte through normal diffusion through pores of the outer subset. The inner subset of the active material can be defined by the active material of the second electrode that is located closer to any of the second surfaces than to the first surface 105. The inner subset can transfer ions to and from the electrolyte within the plurality of cracks 116 since the electrolyte within the cracks 116 is closer than the electrolyte at the first surface 105.

The second electrodes 104 can respectively include pores, which are distinguishable from the cracks 116. A size (e.g., a length, width, depth, etc.) of each of the cracks 116 can be greater than an average size of the pores of the second electrode 104. In some embodiments, a size of each of the cracks 116 can be greater than a size of the largest pore of the second electrode 104. In some embodiments, a size of each of the cracks 116 can be greater than a size of the largest pore of the second electrode 104. In embodiments, the cracks 116 can have an average thickness of about 48 $\mu$m, about 44 $\mu$m, about 26 $\mu$m, about 20 $\mu$m, of between 15 $\mu$m and 50 $\mu$m, among other possibilities. In some embodiments, an average size (e.g., thickness) of each of the cracks 116 can be between 4 and 10,000 times greater than the average size (e.g., thickness) of the respective pores, though other ranges can be effective as well. In some embodiments, an average size (e.g., thickness) of the pores of the second electrode 104 can be between 0.5 nm and 5 $\mu$m including for example about 0.5 nm, about 3 nm, about 0.2 $\mu$m, about 5 $\mu$m, among other possibilities.

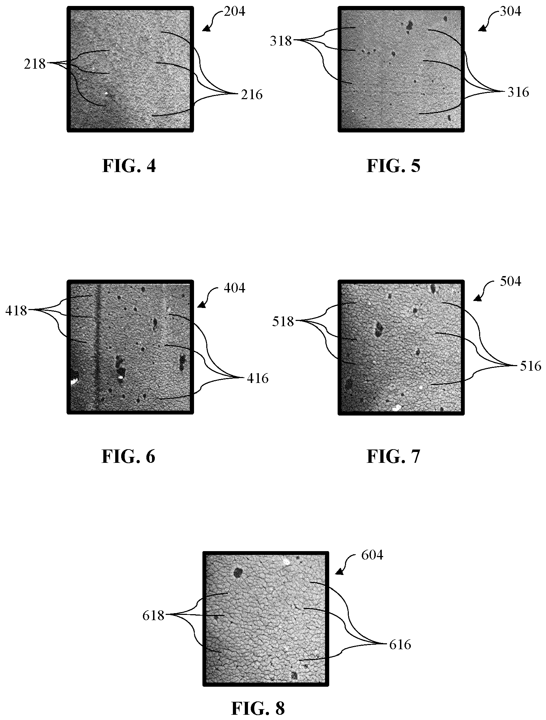

FIGS. 4-8 respectively show top views of other second electrodes 204, 304, 404, 504, 604. The second electrodes 204, 304, 404, 504, 604 can each include any of the structures, features, and relationships of the second electrode 104, and vice versa. For example, the second electrodes 204, 304, 404, 504, 604 can respectively include a plurality of cracks 216, 316, 416, 516, 616 and a plurality of islands 218, 318, 418, 518, 618. The second electrodes 204, 304, 404, 504, 604 can each have different thicknesses. For example, the second electrode 204 can be thinnest of the second electrodes 204, 304, 404, 504, 604 and the thickness of each subsequent second electrode 304, 404, 504, 604 can increase sequentially. For example, the second electrode 204 can have a thickness of 100 $\mu$m, the second electrode 304 can have a thickness of 200 $\mu$m, the second electrode 404 can have a thickness of 300 $\mu$m, the second electrode 504 can have a thickness of 400 $\mu$m, and the second electrode 604 can have a thickness of 500 $\mu$m. Other thicknesses are possible. For example, the second electrode 104 can have a thickness of less than 100 $\mu$m, between 100 $\mu$m and 500 $\mu$m, or greater than 500 $\mu$m. In each of the second electrodes 204, 304, 404, 504, 604, the plurality of cracks can extend partially through the second electrode, completely through the second electrode, or some of the plurality of cracks extend partially through the second electrode while others extend completely through the second electrode.

As shown in FIGS. 4-8, the properties of the respective cracks 216, 316, 416, 516, 616 and islands 218, 318, 418, 518, 618 can vary as a function of the thickness of the respective second electrode 204, 304, 404, 504, 604. The properties of the respective cracks 216, 316, 416, 516, 616 and islands 218, 318, 418, 518, 618 can be proportional to the thickness of the respective second electrode 204, 304, 404, 504, 604. For example, thinner electrodes such as the second electrodes 204, 304 can have more cracks 216, 316 and more islands 218, 318 than the cracks 516, 616 and islands 518, 618 of thicker electrodes such as the second electrodes 504, 604. Moreover, the islands 518, 618 of thicker electrodes such as the second electrodes 504, 604 may be larger and/or more pronounced than the islands 218, 318 of thinner electrodes such as the second electrodes 204, 304. The thicker the electrode the greater the active material loading since thicker electrodes will have more active material than thin electrodes.

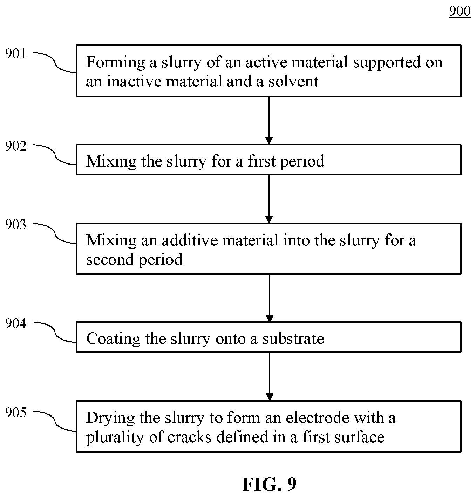

FIG. 9 shows a process 900 of manufacturing an electrode according to aspects of the disclosure. The process 900 can be used to manufacture any of the first and second electrodes 102, 104, 204, 304, 404, 504, 604, previously described. Any of the materials, structures, features, relationships, etc. described in reference to electrodes manufactured with the process 900 can apply to any of the first and second electrodes 102, 104, 204, 304, 404, 504, 604, previously described and vice versa.

The process 900 can include, at step 901, forming a slurry of an active material supported on an inactive material, and a solvent. The active material can include any of the active materials previously described including for example one or more of oxygen, sulfur, selenium, or tellurium. The inactive material can include any of the inactive materials previously described including for example a carbon. Exemplary carbons include, but are not limited to, activated carbons, graphite, graphene, single- or multi-walled carbon nanotubes, charcoal, carbon soot or ash, and so on. The inactive material can include conductive carbon and a binder (aqueous based or nonaqueous based). The binder can comprise a polymeric material. Nonlimiting examples of suitable polymeric materials include carboxy methyl cellulose (CMC), polyvinylidene fluoride (PVDF), polytetrafluoroethylene (PTFE), styrene-butadiene rubber (SBR), polyethylene glycol dimethyl ether (PEGDME), conductive polymer(s) (such as poly(3,4-ethylenedioxythiophene) (PEDOT)), polyacrylic acid (PAA), polyethylenimine (PEI), latex polymer, acrylate, polyurethane, polyurethane acrylate, among other possibilities. The conductive carbon content of the solid part of the slurry can be, for example, less than 50 wt%, less than 40 wt%, less than 30 wt%, less than 20 wt%, 10 wt% or less, among other possibilities. The binder content of the solid part of the slurry can be, for example, less than 50 wt%, less than 40 wt%, less than 30 wt%, less than 20 wt%, 10 wt% or less, among other possibilities. At least some of the inactive and active materials can be a composite material such as for example a carbon-sulfur composite. The carbon-sulfur composite content of the solid part of the slurry can be, for example, greater than 10 wt%, greater than 30 wt%, greater than 50 wt%, greater than 70 wt%, 80 wt% or greater, among other possibilities. The sulfur content of the carbon-sulfur composite can be for example 5 wt% or greater, greater than 20 wt%, greater than 30 wt%, greater than 40 wt%, greater than 50 wt%, among other possibilities. The solvent can be aqueous, organic, or a combination thereof. Suitable organic solvents include, but are not limited to, alcohols (for example, methanol, ethanol, isopropanol, and tert-butanol), ketones (for example, acetone, butanone, cyclopentanone, ethyl isopropyl ketone, methyl isobutyl ketone), aldehydes (for example, formaldehyde, acetaldehyde, propionaldehyde, butyraldehyde)), aliphatics (for example, hexanes and octane), aromatics (for example, benzene, toluene, and xylenes), chlorinated solvents (for example, chloroform and methylene chloride), and N-methyl-2-pyrrolidone (NMP). In some instances, the solvent can be a co-solvent system made of water and one or more water-miscible organic solvents. In some instances, the solvent can be a co-solvent system made of two or more miscible organic solvents. The weight percent solids (i.e., active material and inactive materials) in the slurry can be, for example, between 1-99 wt%, 3-90 wt%, 5-80 wt%, 7-70 wt%, or 10-60 wt%, among other possibilities.

Some embodiments of the slurry formed at step 901 can include a weight percentage of solids (e.g., active material supported on inactive material, conductive carbon, binder, among other possibilities) of between 10% and 60% with the remaining weight percentage (i.e., between 90% and 40%) being solvent. For example, in some embodiments a weight percentage of solids in the slurry can be about 18% and a weight percentage of liquids in the slurry (e.g., water) can be about 82%. In some embodiments the weight percentage of active material supported on the inactive material of the solid solids in the slurry can be between 70% and 99.9%. For example, in some embodiments the weight percentage of active material supported on the inactive material (i.e., a composite of sulfur supported on carbon) of the solid solids in the slurry can be about 80%. For example, in some embodiments the weight percentage of the active material (e.g., sulfur) of the solid solids in the slurry can be about 52% and the weight percentage of the inactive material that supports the active material of the solids in the slurry can be about 29%. In some embodiments the weight percentage of conductive carbon of the solids in the slurry can be between 0.1% and 20% including for example about 11%. In some embodiments the weight percentage of binder of the solids in the slurry can be between 0.5% and 10% including for example about 8%. The term "about" as used at least in this paragraph can include +/- 5% of the stated value.

The process 900 can include, at step 902, mixing the slurry for a first period. The first period can be for example 2 minutes. In embodiments, the mixing can occur in a mixer spinning at a rate between 1800 and 2400 RPMs, though other rates outside this range are possible. In embodiments, the mixing can be performed by hand. The slurry can have a particle size range before flocculation of Dx50=0.1-200 $\mu$m, where Dx50 is the size in microns that splits the distribution with half above and half below this diameter. The slurry can have a particle size range after flocculation of Dx50=0.2-500 $\mu$m. The slurry can have a degree of flocculation (i.e., Dx50 before flocculation/ Dx50 after flocculation) of greater than 1.01, greater than 1.1, greater than 1.2, greater than 1.3, greater than 1.5, among other possibilities.

The process 900 can include, at step 903, mixing an additive material into the slurry for a second period. In embodiments, the step 903 can occur after steps 901 and 902. In embodiments, step 903 can occur concurrently with steps 901 and 902. The second period can be for example 2 minutes. In embodiments, the mixing can occur in a mixer spinning at a rate between 1800 and 2400 RPM, though other rates outside this range are possible. In embodiments, the mixing can be performed by hand. The additive material can be aqueous based or nonaqueous based. The additive material can include at least one of dipropylene glycol dimethyl ether, diethylene glycol monobutyl ether, ethylene glycol monobutyl ether, dipropylene glycol methyl ether, or propylene glycol methyl ether. The additive material can be selected for material properties based on material properties of the solvent used to form the slurry at step 901. For example, the additive material can be a material with a boiling point that is greater than or equal to a boiling point of the solvent (e.g., greater than 100°C). When the solvent is aqueous based, the additive material can be a material with a surface tension that is less than a surface tension of the aqueous based solvent. When the solvent is nonaqueous based, the additive material can be a material with a surface tension that is greater than a surface tension of the solvent. Once added to the slurry, the additive material can represent a total weight percent of the mixture. The total weight percent can be less than 50%, between 0.01 and 40%, between 0.1 and 30%, between 0.5 and 20%, among other possibilities. For example, in some embodiments the weight percentage of additive material of the slurry and additive material (e.g., ether solvent) mixture formed at step 903 can be between 0.5% and 20% including for example about 2.8%. The term "about" as used at least in this paragraph can include +/- 5% of the stated value.

The process 900 can include, at step 904, coating the slurry onto a substrate. The slurry can be coated on to the substrate using any number of techniques including for example with a doctor blade, a slot die, film casting, printing, spraying, extrusion, electrochemical deposition, roller casting, among other possibilities. The substrate can be for example aluminum though other substrates such as for example, stainless steel, carbon cloth, or even a substrate was set up are possible. Substrate can be metal or nonmetal. The substrate can be coated to a thickness between 0.1 $\mu$m and 1 mm. The surface of the substrate can be virgin or modified. For example, the substrate could be carbon coated, or plasma/corona treated. The slurry can be coated on the substrate to have a thickness between 0.1 nm and 1 mm, though other thicknesses can be possible. For example, the slurry can be coated onto to the substrates with any of the thicknesses of the second electrodes 204, 304, 404, 504, 604 previously described.

The process 900 can include, at step 905, drying the slurry on the substrate for a third period to form the electrode. In some instances, drying can be conducted under ambient temperature at atmospheric or reduced pressure. In some instance, drying can be conducted in an oven at an elevated temperature ranging from about 30°C to about 100°C, alternatively from about 40°C to about 85°C, and alternatively from about 50°C to about 70°C. The drying time can be varied based upon, for example the composition of the slurry, the coating thickness, the drying temperature and so on. In some instances, the drying time can range from for example about 30 minutes to about 4 hours. In some instances, a drying time of about 1 hour is sufficient. In instances where drying is performed under ambient temperature, longer drying periods of time such as, for example, about 12 hours may be required. The resultant electrode formed by the process 900 can include any of the features, structures, and relationships described previously with respect to any of the first and second electrodes 102, 104, 204, 304, 404, 504, 604. For example, the electrode formed by the process 900 can include a body laminated on the substrate. The body can include an active material and inactive material and the plurality of cracks defined in a first service of the body. The cracks can be formed by the evaporation of the additive material during the drying of the slurry.

Without limiting the process 900, adding the additive materials at step 903 can trigger flocculation of the slurry formed in step 901 and that this flocculation can contribute to the formation of the plurality of cracks in the electrode. Flocculation can mean a process by which a chemical coagulant or flocculant (e.g., the additive materials described previously) can be added to a solution (e.g., the slurry) to facilitate bonding between particles, which can create larger aggregates that are easier to separate. In some embodiments that additive material added to the slurry at step 903 can be a flocculant. In some embodiments, flocculation of the slurry to form the cracks in the electrode can be performed (either alone or together with adding the additive material at step 903) by increasing the electrolyte concentration, such as salts, in the slurry. In some embodiments, flocculation of the slurry to form the cracks in the electrode can be performed (either alone or together with adding the additive material at step 903) by applying mechanical force to the slurry.

In some embodiments the process can include forming a slurry of an active material supported on an inactive material and a solvent (step 901), mixing the slurry for a first period (step 902), and flocculating for a second period (modified step 903 described previously). The process can include coating the slurry onto a substrate (step 904) and drying the slurry for a third period to form the electrode (step 905). The electrode formed by the process can include body laminated to the substrate. The body includes the active material and the inactive material and a plurality of cracks defined in a first surface of the body formed by evaporation of the additive material during the drying of the slurry. Flocculating the slurry can include adding a flocculant to the slurry. The flocculant can include at least one of dipropylene glycol dimethyl ether, diethylene glycol monobutyl ether, ethylene glycol monobutyl ether, dipropylene glycol methyl ether, or propylene glycol methyl ether. Flocculating the slurry can include increasing an electrolyte concentration of the slurry. Flocculating the slurry can include applying a mechanical force to the slurry.

It will be appreciated that the foregoing description provides examples of the disclosure. However, it is contemplated that other implementations of the disclosure may differ in detail from the foregoing examples. All references to the disclosure or examples thereof are intended to reference the particular example being discussed at that point and are not intended to imply any limitation as to the scope of the disclosure more generally. All language of distinction and disparagement with respect to certain features is intended to indicate a lack of preference for those features, but not to exclude such from the scope of the disclosure entirely unless otherwise indicated.

## Claims

1. An electrode comprising:

   - a substrate;
   - a body laminated to the substrate, wherein the body comprises an active material and an inactive material;
   - a plurality of pores defined by the body;
   - a plurality of cracks defined in a first surface of the body; and
   - a plurality of islands defined in the first surface of the body, the plurality of cracks are wholly or partially surrounded by respective cracks of the plurality of cracks.

2. The electrode of claim 1, wherein the active material has a loading greater than 2 mg/cm$^2$ and the plurality of cracks are configured to resist delamination of the body and the substrate at the loading.

3. The electrode of claim 2, wherein the loading is greater than 6 mg/cm$^2$.

4. The electrode of claim 1, wherein the plurality of islands have an average size of between 0.1 mm and 10 mm.

5. The electrode of claim 4, wherein the plurality of islands have an average size of between 0.2 mm and 1.2 mm.

6. The electrode of claim 1, wherein the plurality of islands have an average circularity of between 0.10 and 0.75.

7. The electrode of claim 1, wherein the plurality of islands have an average roundness of between 0.35 and 0.75.

8. The electrode of claim 1, wherein the active material comprises at least one of oxygen, sulfur, selenium, or tellurium.

9. The electrode of claim 1, wherein the plurality of cracks define pathways into the electrode that are configured to receive an electrolyte, wherein the pathways are configured to improve ion transfer from the electrolyte to an inner subset of the active material that is located closer to one or more of the pathways than to the first surface.

10. The electrode of claim 1, wherein a size of each of the plurality of cracks is greater than an average size of the pores.

11. The electrode of claim 10, wherein the size of each of the plurality of cracks is greater than a size of a largest pore of the pores.

12. The electrode of claim 1, wherein the electrode is a cathode.

13. A method of manufacturing an electrode comprising:

    - forming a slurry comprising an active material supported on an inactive material and a solvent;
    - mixing the slurry for a first period;
    - mixing an additive material into the slurry for a second period;
    - coating the slurry onto a substrate; and
    - drying the slurry for a third period to form the electrode, the electrode comprising a body laminated to the substrate, wherein the body comprises the active material and the inactive material and a plurality of cracks defined in a first surface of the body formed by evaporation of the additive material during the drying of the slurry.

14. The method of claim 13, wherein the active material comprises at least one of oxygen, sulfur, selenium, or tellurium and the inactive material comprises carbon.

15. The method of claim 13, wherein the additive material comprises at least one of dipropylene glycol dimethyl ether, diethylene glycol monobutyl ether, ethylene glycol monobutyl ether, dipropylene glycol methyl ether, or propylene glycol methyl ether.

16. The method of claim 13, wherein a boiling point of the additive material is higher than or equal to a boiling point of the solvent.

17. The method of claim 13, wherein the solvent is aqueous based, and wherein a surface tension of the additive material is less than or equal to a surface tension of the solvent.

18. The method of claim 13, wherein the solvent is non-aqueous based, and wherein a surface tension of the additive material is greater than or equal to a surface tension of the solvent.

19. The method of claim 13, wherein drying is performed under ambient temperature.

20. The method of claim 13, wherein drying is performed at a temperature ranging from 50 to 70°C.

21. A method of manufacturing an electrode comprising:

    - forming a slurry comprising an active material supported on an inactive material and a solvent;
- mixing the slurry for a first period;
- flocculating the slurry for a second period;
- coating the slurry onto a substrate; and
- drying the slurry for a third period to form the electrode, the electrode comprising a body laminated to the substrate, wherein the body comprises the active material and the inactive material and a plurality of cracks defined in a first surface of the body formed by evaporation of the additive material during the drying of the slurry.

22. The method of claim 21, wherein flocculating the slurry comprises adding a flocculant to the slurry.

23. The method of claim 22, wherein the flocculant comprises at least one of dipropylene glycol dimethyl ether, diethylene glycol monobutyl ether, ethylene glycol monobutyl ether, dipropylene glycol methyl ether, or propylene glycol methyl ether.

24. The method of claim 21, wherein flocculating the slurry comprises increasing an electrolyte concentration of the slurry.

25. The method of claim 21, wherein flocculating the slurry comprises applying a mechanical force to the slurry.

**FIG. 1**

**FIG. 2**

**FIG. 3**

**FIG. 4**

**FIG. 5**

**FIG. 6**

**FIG. 7**

**FIG. 8**

900

901 — Forming a slurry of an active material supported on an inactive material and a solvent

902 — Mixing the slurry for a first period

903 — Mixing an additive material into the slurry for a second period

904 — Coating the slurry onto a substrate

905 — Drying the slurry to form an electrode with a plurality of cracks defined in a first surface

**FIG. 9**

Europäisches Patentamt

European Patent Office

Office européen des brevets

## EUROPEAN SEARCH REPORT

Application Number

**EP 23 17 6367**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/178958 A1 (OHIO STATE INNOVATION FOUNDATION [US]) 10 September 2021 (2021-09-10) * claims 1-42 * * figures 1, 3, 5, 6 * * page 16, line 23 - line 24 * * page 17, line 30 - page 18, line 15 * * page 7, line 17 - line 22 * ----- | 1-25 | INV. H01M4/04 H01M4/131 H01M4/136 H01M4/1391 H01M4/1397 H01M4/62 |
| X | US 2012/308862 A1 (SHIBATA DAISUKE [JP] ET AL) 6 December 2012 (2012-12-06) * claims 1-21 * * paragraphs [0007], [0077], [0110] - [0113] * ----- | 1-25 | ADD. H01M4/02 |

TECHNICAL FIELDS SEARCHED (IPC)

H01M

The present search report has been drawn up for all claims

| Place of search | Date of completion of the search | Examiner |
|---|---|---|
| The Hague | 15 September 2023 | Gomes Pinto F., R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 6367

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | Publication date | Patent family member(s) | Publication date |
|---|---|---|---|
| WO 2021178958 A1 | 10-09-2021 | US 2023104437 A1<br>WO 2021178958 A1 | 06-04-2023<br>10-09-2021 |
| US 2012308862 A1 | 06-12-2012 | JP 5472207 B2<br>JP 2012248477 A<br>US 2012308862 A1 | 16-04-2014<br>13-12-2012<br>06-12-2012 |

EPO FORM P0459

For more details about this annex : see Official Journal of the European Patent Office, No. 12/82